# EUROPÄISCHE PATENTSCHRIFT

(11) **EP 0 408 830 B1**
(45) Veröffentlichungstag und Bekanntmachung des Hinweises auf die Patenterteilung: **15.12.1993**
(21) Anmeldenummer: 90104574.0
(22) Anmeldetag: 10.03.1990
(51) Int. Cl.: D03D 15/00, D03D 13/00

(54) **Textiles Flächengebilde**
Reinforcing fabric structure
Tissu de renforcement

(30) Priorität: 21.07.1989 DE 8908877 U
(43) Veröffentlichungstag der Anmeldung: 23.01.1991
(73) Patentinhaber: C. Cramer, Weberei, Heek-Nienborg, GmbH & Co. KG, D-48619 Heek-Nienborg (DE)
(72) Erfinder: Cramer, Johannes, D-4438 Heek-Nienborg (DE)
(74) Vertreter: Stark, Walter, Dr.-Ing.

(56) Entgegenhaltungen:
- EP-A- 0 303 534
- CH-A- 317 407
- FR-A- 1 307 436
- FR-A- 1 394 271
- US-A- 4 320 160

## Beschreibung

Die Erfindung betrifft ein textiles Flächengebilde für Verbundwerkstoffe, insbesondere zur Verstärkung von Kunststoffformteilen, aus einem mehrlagigen Gelege aus Fasersträngen, die lagenweise in Kett- bzw. Schußrichtung ausgerichtet sind und aus einem das Gelege überfassenden Gewebe.

Derartige Flächengebilde sind in Form von Gewebematten bekannt, die aus Kunststoffasern, Glasfasern, Kohlenstofffasern und dgl. aufgebaut sind. Die Gewebematten werden bei der Herstellung von Kunststofformteilen in die noch flüssige Kunststoffmasse eingebettet und bilden nach Aushärtung der Kunststoffmasse eine Verstärkungseinlage. Die Wirkung dieser Verstärkungseinlage ist insbesondere bei hoch beanspruchten Kunststofformteilen deswegen unbefriedigend, weil die Gewebematten, die üblicherweise in Leinwandbindung hergestellt sind, einen verhältnismäßig großen Gewebecrimp besitzen, d. h. sowohl in Kett- als auch in Schußrichtung dehnbar sind. Zwar ist eine Gewebebahn bekannt (EO 0 246 400), bei der durch wechselweise lose und gespannt eingebundene Kettfäden zumindest in Kettrichtung eine geringere Dehnbarkeit erreicht wird, das genügt jedoch nicht für mehraxiale Beanspruchungen in hoch beanspruchten Kunststofformteilen.

Bei einem gattungsgemäßen Flächengebilde (FR-A-1 307 436) bestehen die Lagen des Geleges aus kordierten Fasersträngen. Diese Faserstränge werden durch das Gewebe mit Bindungskräften belastet. Ähnliches gilt auch für eine andere Ausführung (US-A-4 320 160).

Aufgabe der Erfindung ist es, ein textiles Flächengebilde der eingangs beschriebenen Gattung anzugeben, welches sich durch geringe Dehnung (Crimp) sowohl in Kett- als auch in Schußrichtung auszeichnet.

Diese Aufgabe wird gelöst mit einem textilen Flächengebilde der eingangs beschriebenen Gattung, das gekennzeichnet ist durch ein dreilagiges Gelege, dessen beide in einer Projektion auf das Flächengebilde deckungsgleichen Außenlagen aus in Kettrichtung verlaufenden multifilen Flachsträngen bestehen und dessen Innenlage aus in Schußrichtung verlaufenden multifilen Flachsträngen besteht, und durch ein Gewebe mit auf den Außenselten der Außenlagen des Geleges verlaufenden Unterschußfäden und Oberschußfäden sowie in diese eingebundenen, das Gelege durchgreifenden Kettfäden. Bei diesem Flächengebilde ist die Dehnbarkeit sowohl in Kett- als auch in Schußrichtung beachtlich reduziert oder verschwindet ganz, weil Beanspruchungen lediglich von den Fäden oder Fasersträngen des mehrlagigen Geleges aufgenommen werden, während die Unterschußfäden, Oberschußfäden und Kettfäden des Gewebes lose geführt sein können und lediglich die Lagen des Geleges zusammenhalten sollen. Die multifilen Flachstränge können aus verschiedensten Materialien bestehen, insbesondere auch aus solchen, deren Ausdehnungskoeffizient etwa dem Ausdehnungskoeffizienten des Kunststoffmaterials, mit dem zusammen das textile Flächengebilde später verarbeitet wird.

Insbesondere kann zwischen benachbarten Flachsträngen der Außenlage jeweils ein Kettfaden des Gewebes verlaufen. Im Hinblick auf die Führung der Schußfäden des Gewebes empfiehlt sich eine Ausführung, bei der abwechselnd jeweils ein Unterschußfaden und ein Oberschußfaden des Gewebes deckungsgleich zu den Fasersträngen der Innenlage des Geleges angeordnet ist.

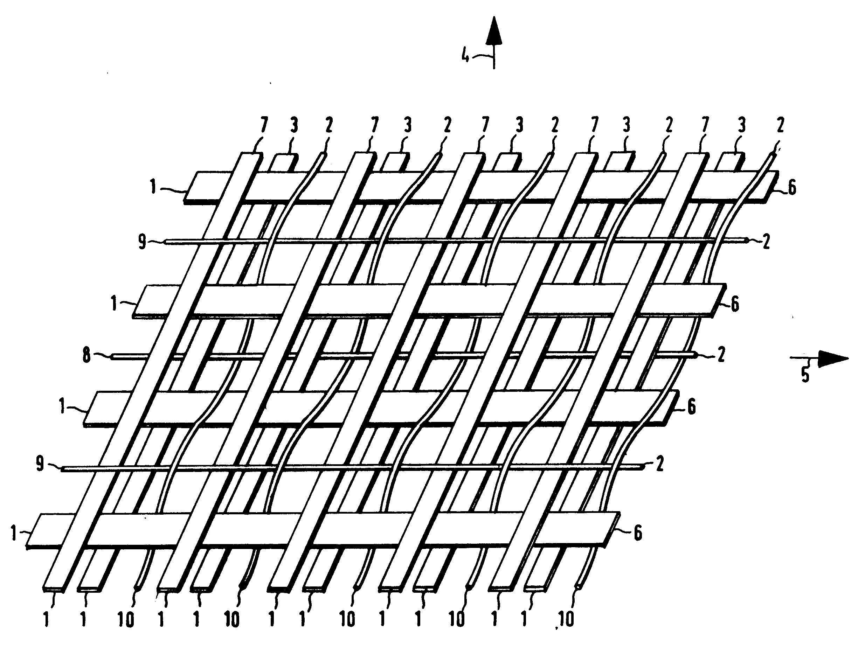

Im folgenden wird ein in der Zeichnung dargestelltes Ausführungsbeispiel der Erfindung erläutert; die einzige Figur zeigt schematisch und in perspektivischer Darstellung einen Ausschnitt aus einem textilen Flächengebilde.

Das dargestellte Flächengebilde besteht in seinem grundsätzlichen Aufbau aus einem dreilagigen Gelege 1, welches in ein Gewebe 2 eingebettet ist.

Zum Gelege 1 gehören multifile Flachstränge 3, die z. B. aus Kohlenstoffasern bestehen können und die in der Praxis dicht an dicht nebeneinander in Kettrichtung verlaufend eine in der Draufsicht untere Außenlage des Geleges 1 bilden. Der Übersichtlichkeit halber sind die Flachstränge 3 mit gegenseitigem Abstand dargestellt.

Zum Gelege 1 gehört ferner eine Innenlage aus in der Praxis dicht an dicht nebeneinander in Schußrichtung 5 verlegten Flachsträngen 6 sowie eine weitere, obere Außenlage aus Flachsträngen 7, die in gleicher Weise verlegt und ausgerichtet sind wie die Flachstränge 3 der unteren Außenlagen. Die Flachstränge 3 der unteren Außenlage und die Flachstränge 7 der oberen Außenlage sind in einer Projektion auf das Flächengebilde deckungsgleich angeordnet.

Unter der unteren Außenlage aus den Flachsträngen 3 sind Unterschußfäden 8 angeordnet und auf der oberen Außenlage aus den Flachsträngen 7 sind Oberschußfäden 9 des Gewebes 2 verlegt. Diese Schußfäden sind so angeordnet, daß abwechselnd jeweils ein Unterschußfaden 8 und ein Oberschußfaden 9 in einer Projektion auf das Flächengebilde deckungsgleich mit den nebeneinander verlegten Flachsträngen 6 der Innenlage des Geleges 1 ist. In die in Kettrichtung 4 aufeinanderfolgenden Unterschußfäden 8 und Oberschußfäden 9 sind Kettfäden 10 des Gewebes 2 eingebunden, und zwar lose eingebunden, so daß die Lagen des Geleges 1 keinen Crimp erfahren. Bei den Fäden des Gewebes 2 handelt es sich um feine Garne.

## Patentansprüche

1. Textiles Flächengebilde für Verbundwerkstoffe, insbesondere zur Verstärkung von Kunststofformteilen, aus einem mehrlagigen Gelege (1) aus Fasersträngen, die lagenweise in Kett- bzw. Schußrichtung (5) ausgerichtet sind und aus einem das Gelege (1) überfassenden Gewebe (2) **gekennzeichnet durch** ein dreilagiges Gelege (1), dessen beide in einer Projektion auf das Flächengebilde deckungsgleichen Außenlagen aus in Kettrichtung verlaufenden multifilen Flachsträngen (3, 7) bestehen und dessen Innenlage aus in Schußrichtung verlaufenden multifilen Flachsträngen (6) besteht, und durch ein Gewebe (2) mit auf den Außenseiten der Außenlagen des Geleges (1) verlaufenden Unterschußfäden (8) und Oberschußfäden (9) sowie in diese eingebundenen, das Gelege (1) durchgreifenden Kettfäden (10).

2. Flächengebilde nach Anspruch 1, **dadurch gekennzeichnet,** daß Zwischen benachbarten Flachsträngen (3 bzw. 7) der Außenanlagen jeweils ein Kettfaden (10) des Gewebes (2) verläuft.

3. Flächengebilde nach einem der Ansprüche 1 oder 2, **dadurch gekennzeichnet,** daß abwechselnd jeweils ein Unterschußfaden (8) und ein Oberschußfaden (9) des Gewebes (2) deckungsgleich zu den Fadensträngen (6) der Innenlage des Geleges (1) angeordnet ist.

## Claims

1. Textile flat-shaped structure for composite materials, more especially for the reinforcement of plastics material moulded parts, comprising a multi-layered lattice (1) of fibrous strands, which are orientated in layers in the warp or weft direction (5) respectively, and a web (2), which engages over the lattice (1), characterised by a three-layered lattice (1), the two outer layers being congruent in area in a projection onto the flat-shaped structure and comprising a series of flat strands (3, 7), which extend in the warp direction, and the inner layer comprises a series of flat strands (6), which extend in the weft direction, and by a web (2) having lower weft threads (8), which extend along the external surfaces of the outer layers of the lattice (1), and upper weft threads (9) as well as warp threads (10), which are interlaced in said upper weft threads and engage through the lattice (1).

2. Flat-shaped structure according to claim 1, characterised in that a warp thread (10) of the web (2) extends between adjacent flat strands (3 and 7 respectively) of the outer layers.

3. Flat-shaped structure according to one of claims 1 or 2, characterised in that a lower weft thread (8) and an upper weft thread (9) of the web (2) are alternately disposed so as to correspond with the thread strands (6) of the inner layer of the lattice (1).

## Revendications

1. Structure textile plane pour des matériaux composites, notamment pour le renforcement de pièces moulées en matière plastique, constituée d'une nappe multicouche (1) d'écheveaux de fibres qui sont orientés couche par couche dans le sens de chaîne ou de trame (5), et d'un tissu (2) englobant la nappe (1), **caractérisée** par une nappe (1) à trois couches, dont les deux couches extérieures, en recouvrement dans une vue en projection sur la structure plane, sont constituées d'écheveaux plats multifilaires (3, 7) s'étendant dans le sens de chaîne, et dont la couche intérieure est constituée d'écheveaux plats multifilaires (6) s'étendant dans le sens de trame, et par un tissu (2) avec des fils de trame inférieure (8) et des fils de trame supérieure (9) s'étendant sur les côtés extérieurs des couches extérieures de la nappe (1), ainsi qu'avec des fils de chaîne (10) entrelacés dans ces fils de trame en traversant la nappe (1).

2. Structure plane selon la revendication 1, **caractérisée** en ce que les fils de chaîne (10) du tissu (2) s'étendent respectivement entre des écheveaux plats voisins (3 ou 7) des couches extérieures.

3. Structure plane selon la revendication 1 ou 2, **caractérisée** en ce que les fils de trame inférieure (8) et les fils de trame supérieure (9) du tissu (2) sont disposés à tour de rôle en recouvrement avec les écheveaux plats (6) de la couche intérieure de la nappe (1).
